# EUROPÄISCHE PATENTSCHRIFT

(11) **EP 2 553 413 B1**
(45) Veröffentlichungstag und Bekanntmachung des Hinweises auf die Patenterteilung: **16.01.2019**
(21) Anmeldenummer: 11711498.3
(22) Anmeldetag: 22.03.2011
(51) Int. Cl.: G01K 13/02

(54) **MESSFÜHLER MIT EINEM GEHÄUSE**
MEASURING PROBE HAVING A HOUSING
CAPTEUR DE MESURE PRÉSENTANT UN BOÎTIER

(30) Priorität: 30.03.2010 DE 102010013321
(43) Veröffentlichungstag der Anmeldung: 06.02.2013
(73) Patentinhaber: TDK Electronics AG, 81671 München (DE)
(72) Erfinder: KUBIAK, Michael, 10249 Berlin (DE); GRUNDMANN, Wolfgang, 16547 Birkenwerder (DE)
(74) Vertreter: Epping - Hermann - Fischer
(86) Internationale Anmeldenummer: PCT/EP2011/054369
(87) Internationale Veröffentlichungsnummer: WO 2011/124468

(56) Entgegenhaltungen:
- EP-A2- 1 984 717
- WO-A1-03/076920
- GB-A- 734 702
- US-A- 2 496 806
- US-A- 4 265 115

## Beschreibung

Es wird ein Messfühler angegeben, der beispielsweise zur Messung der Temperatur oder der Feuchtigkeit eines strömenden Mediums verwendet werden kann.

In den Druckschriften DE 10 2006 021 528 B3 und DE 10 2008 029 793 A1 sind Messfühler zur Messung der Temperatur eines Luftstroms beschrieben.

In der Druckschrift EP 1 984 717 A2 ist ein Fühler mit einer rechteckigen Umfangslinie beschrieben. In den Druckschriften WO 03/076920 A1, US 2 496 806 A, US 4 265 115 A und GB 734 702 A sind Fühler mit kreisförmigen Umfangslinien beschrieben.

Es ist eine zu lösende Aufgabe, einen Messfühler anzugeben, bei dem ein Gehäuse günstige Eigenschaften aufweist.

Es wird ein Messfühler mit einem Gehäuse zur Aufnahme eines Sensorelements angegeben. Der Messfühler ist in eine Öffnung einer Vorrichtung zur Führung eines Mediums einsteckbar. Das Gehäuse des Messfühlers weist senkrecht zur Einsteckrichtung des Gehäuses in die Vorrichtung eine gekrümmte äußere Umfangslinie auf.

Beispielsweise werden mittels des Messfühlers die Temperatur eines Mediums, vorzugsweise eines gasförmigen oder flüssigen Mediums, erfasst. Das Medium strömt dabei vorzugsweise durch die Vorrichtung, die als Schacht oder Rohrstück ausgebildet sein kann. Der Messfühler wird in Einsteckrichtung in die Vorrichtung eingesteckt, wobei die Einsteckrichtung vorzugsweise senkrecht zur Strömungsrichtung des Mediums verläuft.

Das Sensorelement ist zumindest teilweise vom Gehäuse des Messfühlers umgeben. Insbesondere kann das Gehäuse Abschirmelemente aufweisen, die verhindern, dass das Medium frontal auf das Sensorelement auftrifft. Hierzu kann das Gehäuse einen Bereich, insbesondere einen Wandbereich, aufweisen, der in Strömungsrichtung des Mediums zwischen dem Medium und dem Sensorelement angeordnet ist, so dass eine Projektion des Abschirmelements in Strömungsrichtung das Sensorelement überdeckt. Dies kann insbesondere bedeuten, dass ein Abschirmelement, beispielsweise ein Teil einer Wand des Gehäuses, in einer Richtung senkrecht zur Einsteckrichtung zwischen dem Medium und dem Sensorelement angeordnet ist. Beispielsweise kann das Sensorelement auch von allen Seiten vom Gehäuse umschlossen sein.

Vorzugsweise ist das Gehäuse derart ausgebildet, das es das Strömungsverhalten des Mediums möglichst wenig verändert. Beispielsweise liegt in der Vorrichtung sowohl vor dem Auftreffen des Mediums auf das Gehäuse als auch danach eine laminare Strömung des Mediums vor. Vorzugsweise kann durch die gekrümmte äußere Umfangslinie erreicht werden, dass das Strömungsverhalten des Mediums möglichst wenig verändert wird.

Das Gehäuse weist eine Mehrzahl von Eintrittsöffnungen zur Führung des Mediums in das Innere des Gehäuses auf. Weist das Gehäuse zumindest ein Abschirmelement auf, so kann dies insbesondere bedeuten, dass eine Projektion der Eintrittsöffnungen in Strömungsrichtung nicht das Sensorelement überdeckt, so dass das Medium das Sensorelement nicht direkt anströmen kann. Beispielsweise kann das Gehäuse eine Mehrzahl von Öffnungen aufweisen, die ein Abschirmelement zumindest teilweise umgeben.

Vorzugsweise ist das Gehäuse derart ausgebildet, dass das Medium nach dem Eintritt in das Gehäuse zum Sensorelement gelenkt wird. Dazu sind beispielsweise Umlenkmittel vorgesehen. Ein Umlenkmittel kann beispielsweise durch einen kegelartigen Gehäuseteil gebildet werden, der in Einsteckrichtung colinear mit dem Sensorelement angeordnet ist und dessen Spitze auf das Sensorelement zeigt. Hierbei kann die Spitze auch eine Abrundung aufweisen. Weiterhin kann das kegelartige Gehäuseteil eine Mantelfläche aufweisen, die in einer Ebene parallel zur Einsteckrichtung gerade, gekrümmt oder gebogen ist. Durch das Umlenkmittel kann es insbesondere auch möglich sein, das Medium zum Sensorelement zu lenken, wenn ein oben beschriebenes Abschirmelement vorhanden ist, das ein direktes Anströmen des Sensorelements verhindert. Weiterhin kann durch das zumindest eine Umlenkmittel beispielsweise das Medium, das das Gehäuse auf zumindest einem Teil seiner gesamten Länge oder auf seiner gesamten Länge in der Vorrichtung anströmt, auf das Sensorelement gelenkt werden, wodurch eine integrale Messung möglich ist. Auf diese Weise kann eine direkte Messung der relevanten Parameter des Mediums erfolgen, wodurch eine schnelle Erfassung von Schwankungen eines Parameters ermöglicht wird. Zudem kann das Gehäuse auch Mittel zur Bündelung des Luftstroms aufweisen, so dass vom Sensorelement Durchschnittswerte der Parameter erfasst werden können. Beispielsweise kann ein Mittel zur Bündelung gleichzeitig auch als Umlenkmittel ausgeführt sein.

Zudem weist das Gehäuse eine Mehrzahl von Austrittsöffnungen auf, durch die das Medium das Gehäuse wieder verlassen kann. Somit wird das Gehäuse zumindest von einem Teil des Mediums durchströmt.

Die äußere Umfangslinie des Gehäuses kann beispielsweise durch die Eintritts- und Austrittsöffnungen unterbrochen sein. Durch die Angabe, dass das Gehäuse "im Wesentlichen gekrümmt" ist, sollen derartige teilweise Unterbrechungen der gekrümmten Umfangslinie mit umfasst sein. Vorzugsweise ist die Umfangslinie zumindest in einem Bereich des Gehäuses, der nicht durch die Eintritts- oder Austrittsöffnungen unterbrochen ist, gekrümmt ausgebildet.

Beispielsweise sind Eintrittsöffnungen auf der Seite des Gehäuses, die frontal vom Medium angeströmt wird, vorgesehen und Austrittsöffnungen auf der dazu gegenüberliegenden Seite. In diesem Fall weist das Gehäuse vorzugsweise auf den Seiten, an denen das Medium am Gehäuse vorbeiströmt, eine gekrümmte Oberfläche auf.

In einer Ausführungsform ist die äußere Umfangslinie des Gehäuses im Wesentlichen elliptisch ausgebildet. Beispielsweise weist eine elliptische Umfangslinie eine Hauptachse auf, die länger ist als die Nebenachse.

Dabei kann das Gehäuse symmetrisch bezüglich einer Ebene ausgebildet sein, in der die Einsteckrichtung verläuft. Durch eine derartige symmetrische Ausbildung des Gehäuses wird ein Einstecken des Messfühlers in zwei verschiedenen Drehorientierungen um die Einsteckrichtung ermöglicht. Der Messfühler kann dann bei einer elliptischen Form der äußeren Umfangslinie beispielsweise in zwei möglichen Einsteckorientierungen in die Vorrichtung eingesteckt werden, so dass die Hauptachse parallel zur Strömungsrichtung des Mediums verläuft.

In einer bevorzugten Ausführungsform weist das Gehäuse eine äußere Umfangslinie auf, die im Wesentlichen kreisförmig ist.

Vorzugsweise ist das Gehäuse rotationssymmetrisch um die Einsteckrichtung ausgebildet. In diesem Fall kann der Messfühler in beliebigen Drehorientierungen in die Einsteckrichtung in die Vorrichtung eingesteckt werden. Dies erlaubt einen besonders unkomplizierten Einsteckvorgang.

Die Eintrittsöffnungen sind derart ausgebildet, dass eine Lenkung des Mediums in das Innere des Gehäuses bei jeder Drehorientierung des Messfühlers um die Einsteckrichtung erfolgen kann.

In diesem Fall sind vorzugsweise auch die Austrittsöffnungen entsprechend ausgebildet. Dies ermöglicht es, dass der Messfühler bei jeder Drehorientierung um die Einsteckrichtung zuverlässig Messdaten erfassen kann.

Weiterhin kann der Messfühler eine Halterung zur mechanischen Verbindung des Messfühlers mit der Vorrichtung aufweisen. Vorzugsweise ist die Halterung am Gehäuse angeordnet und kann dabei auch einen integralen Bestandteil des Gehäuses bilden.

Die Halterung weist vorzugsweise einen Anschlag auf, der senkrecht zur Einsteckrichtung verläuft. Durch den Anschlag kann ein zu weites Einstecken des Messfühlers in die Öffnung verhindert werden.

Vorzugsweise weist der Anschlag senkrecht zur Einsteckrichtung des Gehäuses eine gekrümmte äußere Umfangslinie auf. Beispielsweise ist die Umfangslinie elliptisch oder kreisförmig ausgebildet.

Am Anschlag kann eine ringförmige Dichtung angeordnet sein. Die Dichtung dient vorzugsweise zur Abdichtung einer Öffnung einer Vorrichtung, in die der Messfühler eingesteckt wird.

Beispielsweise ist die Dichtung auf das Gehäuse aufgeschoben. Vorzugsweise umgibt die Dichtung das Gehäuse, zumindest in einer Ebene senkrecht zur Einsteckrichtung, vollständig. Dabei liegt die Dichtung vorzugsweise umlaufend formschlüssig am Gehäuse an. Vorzugsweise weist das Gehäuse zumindest in dem Bereich, in dem die Dichtung vorgesehen ist, eine gekrümmte äußere Umfangslinie auf. In diesem Fall kann die Formschlüssigkeit der Dichtung und des Gehäuses besonders gut erreicht werden. Zudem kann die mechanische Belastung der Dichtung bei einem Gehäuse gering gehalten werden, das eine gekrümmte Anlagefläche, d. h., die Fläche, an der die Dichtung am Gehäuse anliegt, aufweist. Insbesondere ist es von Vorteil, wenn die Anlagefläche keine Ecken und Kanten aufweist.

Weiterhin wird eine Messfühleranordnung mit einem derartigen Messfühler und einer Vorrichtung zur Führung eines Mediums angegeben. Die Vorrichtung weist eine Öffnung zum Einstecken des Messfühlers auf. Vorzugsweise ist die Form der Öffnung komplementär zur äußeren Umfangslinie des Gehäuses ausgebildet.

Im Folgenden werden die angegebenen Gegenstände und ihre vorteilhaften Ausgestaltungen anhand von schematischen und nicht maßstabsgetreuen Figuren erläutert. Es zeigen:
- Figur 1: in einer seitlichen Aufsicht einen Messfühler aufweisend ein Gehäuse,
- Figur 2: in einer Aufsicht entgegen der Einsteckrichtung gesehen den Messfühler aus Figur 1,
- Figur 3: in einem Längsschnitt einen Messfühler, der in eine Öffnung einer Vorrichtung eingesteckt ist.

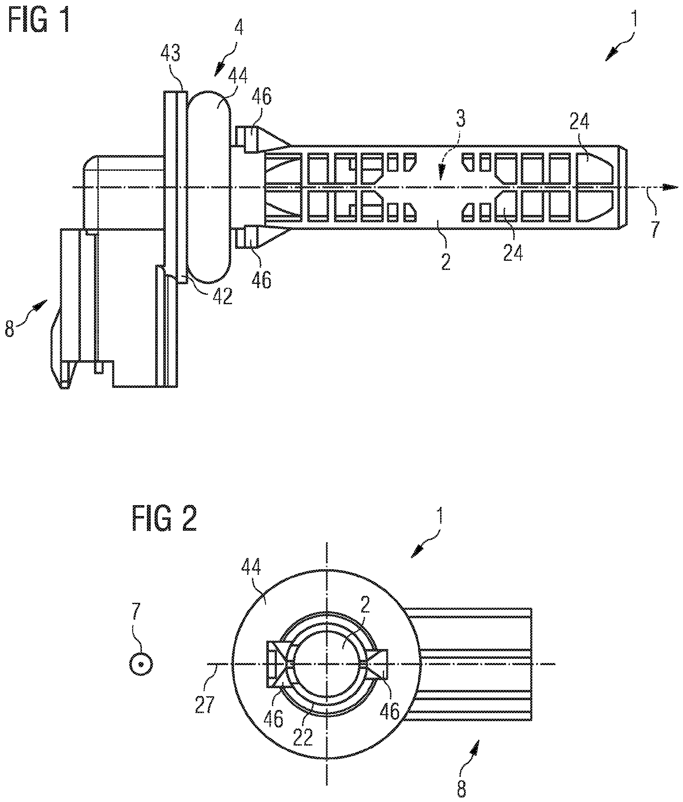

Figur 1 zeigt einen Messfühler 1, der beispielsweise zur Erfassung der Temperatur oder der Feuchtigkeit eines Mediums eingesetzt wird. Vorzugsweise dient der Messfühler 1 zur Erfassung von Messwerten eines strömenden Mediums, beispielsweise eines Luftstroms, und kann dazu in eine Vorrichtung, in der das Medium geführt wird, eingesteckt werden.

Der Messfühler 1 weist ein Gehäuse 2 auf, in dem ein Sensorelement 3 angeordnet ist. Das Gehäuse 2 umgibt das Sensorelement 3 zumindest teilweise und kann sowohl zur Halterung des Sensorelements 3 als auch zur Abschirmung des Sensorelements 3 vor einer direkten Einströmung des Mediums dienen. Das Sensorelement 3 ist in Figur 1 nicht sichtbar, da es vom Gehäuse 2 verdeckt wird.

Der Messfühler 1 ist entlang einer Einsteckrichtung 7 in die Öffnung einer Vorrichtung einsteckbar. Die Einsteckrichtung 7 entspricht der Längsachse des Messfühlers 1. Zur Befestigung an der Vorrichtung weist der Messfühler 1 eine Halterung 4 auf. Beim Einstecken in eine Öffnung der Vorrichtung wird der Messfühler 1 mit seinem Gehäuse 2 in Einsteckrichtung in die Öffnung geschoben bis die Halterung 4 an einer Außenwand der Vorrichtung anschlägt. Zur Fixierung des Messfühlers 1 an der Vorrichtung sind Rastmittel 46 vorgesehen, die beim Einstecken mit einer Innenwand der Vorrichtung verrasten.

Die Halterung 4 weist einen Anschlag 42 auf, an dem ein Dichtungsring 44 anliegt. Bei einem eingesteckten Messfühler 1 liegt der Dichtungsring 44 an der Außenwand der Vorrichtung an und dichtet die Öffnung nach außen ab.

Zur Herstellung eines elektrischen Anschlusses des Sensorelements 3 weist der Messfühler 1 ein Anschlussteil 8 auf. Im eingesteckten Zustand befindet sich das Anschlussteil 8 außerhalb der Vorrichtung. Beispielsweise ist das Anschlussteil 8 als Stecker ausgebildet, in dem eine Weiterkontaktierung eingesteckt werden kann.

Das Gehäuse 2 weist mehrere Eintrittsöffnungen 24 auf, durch die das Medium zum Sensorelement 3 gelangen kann. Je nach Einsteckorientierung des Messfühlers 1, das heißt je nach Drehorientierung des Messfühlers 1 um die Einsteckrichtung 7, können diese Eintrittsöffnungen 24 auch als Austrittsöffnungen für das Medium dienen. Vorzugsweise weist der Messfühler 1 auch auf der Seite, die der abgebildeten Seite gegenüberliegt, Eintritts- oder Austrittsöffnungen 24 auf. Somit kann das Medium den Messfühler 1 durchströmen und dabei zum Sensorelement 3 gelangen.

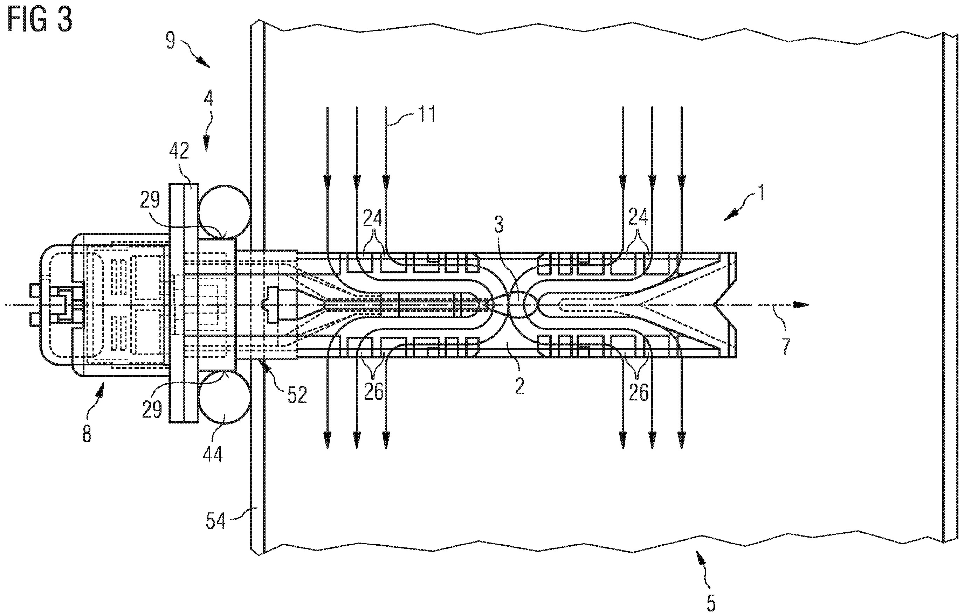

Die Eintrittsöffnungen 24 sind zumindest teilweise um ein Abschirmelement angeordnet, das durch einen Teil des Gehäuses 2 beziehungsweise der Gehäusewand in dem Bereich gebildet ist, der in Projektion entlang der Strömungsrichtung das Sensorelement 3 überdeckt. In Figur 1 bildet somit der Teil des Gehäuses 2, der das Sensorelement 3 verdeckt, ein Abschirmelement, das ein direktes Anströmen des Sensorelements 3 durch das Medium verhindert. Die Eintrittsöffnungen 24 sind bis auf den Bereich des Abschirmelements über die gesamte Länge des Gehäuses 2 innerhalb der Vorrichtung entlang der Einsteckrichtung 7 angeordnet und in Bezug auf eine zur Einsteckrichtung 7 senkrechten Ebene durch das Sensorelement 3 symmetrisch angeordnet. Insbesondere weist das Gehäuse 2 eine Mehrzahl von Eintrittsöffnungen 24 auf, die symmetrisch zu einer zur Einsteckrichtung 7 senkrechten Ebene durch das Sensorelement 2 angeordnet sind. Wie in Verbindung mit Figur 3 erläutert, kann so das Medium in der Vorrichtung über nahezu die gesamte Länge des Gehäuses 2 innerhalb der Vorrichtung in das Innere des Gehäuses 2 und zum Sensorelement 3 strömen, wodurch eine integrale Messung von zu messenden Parametern des Mediums entlang des Gehäuses 2 möglich ist.

Figur 2 zeigt eine Aufsicht auf den Messfühler 1 entgegen der Einsteckrichtung 7 gesehen.

Das Gehäuse 2 weist in einer Ebene senkrecht zur Einsteckrichtung 7 eine kreisförmige äußere Umfangslinie 22 auf. Dabei ist die äußere Umfangslinie 22 durch Eintrittsöffnungen oder Austrittsöffnungen unterbrochen. Vorzugsweise weist das Gehäuse 2 wenigstens auf der Höhe seiner Längsachse, an der sich das Sensorelement 3 befindet, eine kreisförmige Umfangslinie auf.

Durch die kreisförmige Umfangslinie 22 kann ein günstiger Strömungsverlauf des Mediums erreicht werden. Vorzugsweise führt der Messfühler 1 zu einer möglichst geringen Störung der Strömung des Mediums.

Auch der Anschlag 42 weist eine im Wesentlichen kreisförmige äußere Umfangslinie 43 auf (siehe Figur 1). Der Dichtungsring 44 ist als Kreisring ausgebildet und liegt formschlüssig am Gehäuse 2 an.

Das Gehäuse 2 ist abgesehen von den Rastmitteln 46 symmetrisch zu einer Ebene 27 ausgebildet, in der die Längsachse des Messfühlers 1 verläuft, und die sich im eingesteckten Zustand des Messfühlers 1 beispielsweise senkrecht zur Strömungsrichtung des Mediums erstreckt. Bei der hier dargestellten Ausführungsform sind die Rastmittel 46 derart ausgebildet, dass sie z. B. in Kombination mit zusätzlichen Stegen, die am Einbauort angeordnet sind, die Drehorientierung des Messfühlers 1 in der Vorrichtung eindeutig festlegen können. Somit kann der Messfühler 1 am Einbauort nur in einer Drehorientierung eingesteckt werden.

In einer anderen Ausführungsform können die Rastmittel 46 und der Einbauort derart ausgebildet sein, dass verschiedene Drehorientierungen des Messfühlers 1 möglich sind. Beispielsweise können die Rastmittel 46 symmetrisch zur Ebene 27 ausgebildet sein, in der die Längsachse des Messfühlers 1 verläuft und die sich im eingesteckten Zustand des Messfühlers 1 senkrecht zur Strömungsrichtung des Mediums erstreckt. In diesem Fall kann der Messfühler 1 beispielsweise in zwei verschiedenen Drehorientierungen um die Einsteckrichtung 7 in eine Vorrichtung eingesteckt werden.

Figur 3 zeigt eine Messfühleranordnung 9 mit einem Messfühler 1, der zum Beispiel wie in den Figuren 1 und 2 ausgebildet sein kann, und mit einer Vorrichtung 5, die eine Öffnung 52 aufweist, in die der Messfühler 1 eingesteckt ist. Die Vorrichtung 5 ist als Rohr mit einer Außenwand 54 ausgebildet, in dem ein Medium M strömt.

Die Einsteckrichtung 7 des Messfühlers 1 verläuft senkrecht zur Strömungsrichtung des Mediums M. Das Medium M strömt durch Eintrittsöffnungen 24 in das Innere des Gehäuses 2, wird auf das Sensorelement 3 gelenkt und tritt durch Austrittsöffnungen 26 wieder aus dem Gehäuse 2 aus.

Zur Umlenkung des Mediums M, das wie in Zusammenhang mit Figur 1 erläutert über nahezu die gesamte Länge des Gehäuses 2 innerhalb der Vorrichtung in das Gehäuse 2 eintreten kann, weist das Gehäuse 2 im Inneren zwei kegelartige Gehäuseteile auf, die in Einsteckrichtung 7 colinear mit dem Sensorelement 3 angeordnet sind und die jeweils eine Spitze aufweisen, die auf das Sensorelement 3 zeigt. Das Sensorelement 3 ist dabei durch den steckerseitigen kegelartigen Gehäuseteil am Gehäuse befestigt.

Weiterhin weisen die kegelartigen Gehäuseteile jeweils eine Mantelfläche auf, die durch die Eintrittsöffnungen 24 vom Medium M angeströmt wird und die in einer Ebene parallel zur Einsteckrichtung 7, also insbesondere in der gezeigten Zeichnungsebene, geknickt oder gebogen ist. Dadurch kann das Medium M zum Sensorelement 3 gelenkt werden, der durch das in Verbindung mit Figur 1 beschriebene Abschirmelement gegen ein direktes Anströmen abgeschirmt ist.

Zusätzlich wirken die kegelartigen Gehäuseteile auch als Mittel zur Bündelung des Mediums M, so dass vom Sensorelement 3 trotz dessen im Vergleich zum Gehäuse 2 keinen Abmessungen Durchschnittswerte der zu messenden Parameter des Mediums M entlang nahezu der gesamten Länge des Gehäuses 2 innerhalb der Vorrichtung erfasst werden können.

Der Messfühler 1 ist derart ausgebildet, dass er auch in einer Orientierung in die Öffnung 52 einsteckbar ist, die gegenüber der gezeigten Orientierung um 180° um die Einsteckrichtung 7 gedreht ist.

Der Dichtungsring 44 liegt formschlüssig an der Außenwand 54 der Vorrichtung 5 und am Gehäuse 2 an. Aufgrund der kreisförmigen Umfangslinie des Gehäuses 2, insbesondere an der Anlagefläche 29 des Dichtungsrings 44, liegt der Dichtungsring 44 umlaufend formschlüssig am Gehäuse an und ermöglicht eine besonders gute Abdichtung der Vorrichtung 5.

### Bezugszeichenliste

- 1: Messfühler

- 2: Gehäuse
- 22: äußere Umfangslinie des Gehäuses
- 24: Eintrittsöffnung
- 26: Austrittsöffnung
- 27: Ebene senkrecht zur Strömungsrichtung
- 29: Anlagefläche

- 3: Sensorelement

- 4: Halterung
- 42: Anschlag
- 43: äußere Umfangslinie des Anschlags
- 44: ringförmige Dichtung
- 46: Rastmittel

- 5: Vorrichtung
- 52: Öffnung
- 54: Wand

- 6: Medium

- 7: Einsteckrichtung

- 8: Anschlussteil

- 9: Messfühleranordnung

## Patentansprüche

1. Messfühler mit einem Gehäuse (2) zur Aufnahme eines Sensorelements (3), wobei der Messfühler (1) in eine Öffnung (52) einer Vorrichtung (5) zur Führung eines Mediums (M) einsteckbar ist, wobei der Messfühler derart ausgebildet ist, dass eine Erfassung von Messdaten in verschiedenen Drehorientierungen um eine Einsteckrichtung (7) des Gehäuses (2) in die Vorrichtung (5) ermöglicht ist,
bei dem das Gehäuse (3) eine Mehrzahl von Eintrittsöffnungen (24) zur Führung des Mediums (M) in das Innere des Gehäuses (3) und eine Mehrzahl von Austrittsöffnungen (26) aufweist,
wobei die Eintrittsöffnungen (24) auf einer ersten Seite des Gehäuses (3) und die Austrittsöffnungen auf (26) einer zweiten Seite des Gehäuses (3) angeordnet sind, die der ersten Seite gegenüberliegt,
wobei abhängig von der Drehorientierung die Eintrittsöffnungen (24) auch als Austrittsöffnungen und die Austrittsöffnungen (26) als Eintrittsöffnungen dienen können,
**gekennzeichnet dadurch, dass**
das Gehäuse (2) senkrecht zur Einsteckrichtung (7) des Gehäuses (2) in die Vorrichtung (5) eine gekrümmte äußere Umfangslinie (22) aufweist, und bei dem die Eintrittsöffnungen (24) so ausgebildet sind, dass eine Führung des Mediums (M) in das Innere des Gehäuses (3) bei jeder Drehorientierung des Messfühlers (1) um die Einsteckrichtung (7) erfolgen kann.

2. Messfühler nach Anspruch 1,
bei dem die äußere Umfangslinie (22) des Gehäuses (2) im Wesentlichen elliptisch ist.

3. Messfühler nach einem der Ansprüche 1 oder 2,
bei dem die äußere Umfangslinie (22) des Gehäuses (2) im Wesentlichen kreisförmig ist.

4. Messfühler nach einem der Ansprüche 1 bis 3,
bei dem das Gehäuse (3) rotationssymmetrisch um die Einsteckrichtung (7) ausgebildet ist.

5. Messfühler nach einem der Ansprüche 1 bis 4 aufweisend eine Halterung (4) zur mechanischen Verbindung des Messfühlers (1) mit der Vorrichtung (5), wobei die Halterung (4) am Gehäuse (3) angeordnet ist und einen Anschlag (42) aufweist, der senkrecht zur Einsteckrichtung (7) verläuft.

6. Messfühler nach Anspruch 5,
bei dem der Anschlag (42) senkrecht zur Einsteckrichtung (7) des Gehäuses (3) eine kreisförmige Umfangslinie (22) aufweist.

7. Messfühler nach einem der Ansprüche 5 oder 6,
bei dem am Anschlag (42) eine ringförmige Dichtung (44) angeordnet ist.

8. Messfühleranordnung
mit einem Messfühler (1) nach einem der Ansprüche 1 bis 7 und einer Vorrichtung (5) zur Führung eines Mediums (M),
wobei die Vorrichtung (5) eine Öffnung (52) zum Einstecken des Messfühlers (1) aufweist und wobei die Form der Öffnung (52) komplementär zur äußeren Umfangslinie (22) des Gehäuses (2) ausgebildet ist.

## Claims

1. Measuring probe, with a housing (2) for accommodating a sensor element (3), wherein the measuring probe (1) can be inserted into an opening (52) of a device (5) for routing a medium (M), wherein the measuring probe is embodied in such a way that a capture of measurement data is possible in different rotational orientations around an insertion direction (7) of the housing (2) into the device (5), in which the housing (3) has a plurality of inlet openings (24) for routing the medium (M) into the interior of the housing (3) and a plurality of outlet openings (26),
wherein the inlet openings (24) are arranged on a first side of the housing (3) and the outlet openings (26) are arranged on a second side of the housing (3), said second side lying opposite the first side,
wherein, depending on the rotational orientation, the inlet openings (24) can also serve as outlet openings and the outlet openings (26) can also serve as inlet openings,
**characterized in that**
the housing (2) has a curved outer circumferential line (22) perpendicular to the insertion direction (7) of the housing (2) into the device (5), and
in which the inlet openings (24) are embodied such that the medium (M) can be routed into the interior of the housing (3) at any rotational orientation of the measuring probe (1) around the insertion direction (7).

2. Measuring probe according to Claim 1,
in which the outer circumferential line (22) of the housing (2) is substantially elliptical.

3. Measuring probe according to either of Claims 1 or 2,
in which the outer circumferential line (22) of the housing (2) is substantially circular.

4. Measuring probe according to one of Claims 1 to 3,
in which the housing (3) has a rotationally symmetric embodiment around the insertion direction (7).

5. Measuring probe according to one of Claims 1 to 4, having a holder (4) for mechanically connecting the measuring probe (1) to the device (5), wherein the holder (4) is arranged on the housing (3) and has a stop (42) which runs perpendicular to the insertion direction (7).

6. Measuring probe according to Claim 5,
in which the stop (42) perpendicular to the insertion direction (7) of the housing (3) has a circular circumferential line (22).

7. Measuring probe according to either of Claims 5 or 6,
in which an annular seal (44) is arranged on the stop (42).

8. Measuring probe arrangement,
with a measuring probe (1) according to one of Claims 1 to 7 and a device (5) for routing a medium (M), wherein the device (5) has an opening (52) for inserting the measuring probe (1) and wherein the shape of the opening (52) is embodied complementary to the outer circumferential line (22) of the housing (2).

## Revendications

1. Capteur de mesure comportant un boîtier (2) destiné à loger un élément capteur (3), dans lequel le capteur de mesure (1) peut être inséré dans une ouverture (52) d'un dispositif (5) destiné à guider un fluide (M), dans lequel le capteur de mesure est conçu de telle sorte qu'il est possible d'acquérir des données de mesure dans différentes orientations de rotation autour d'une direction d'insertion (7) du boîtier (2) dans le dispositif (5),
dans lequel le boîtier (3) présente une pluralité d'ouvertures d'entrée (24) destinées à guider le fluide (M) à l'intérieur du boîtier (3) et une pluralité d'ouvertures de sortie (26),
dans lequel les ouvertures d'entrée (24) sont disposées sur un premier côté du boîtier (3) et les ouvertures de sortie (26) sont disposées sur un second côté du boîtier (3) qui est opposé au premier côté,
dans lequel, selon l'orientation de rotation, les ouvertures d'entrée (24) peuvent également servir d'ouvertures de sortie et les ouvertures de sortie (26) d'ouvertures d'entrée,
**caractérisé en ce que**
le boîtier (2) présente, perpendiculairement à la direction d'insertion (7) du boîtier (2) dans le dispositif (5), une ligne périphérique extérieure incurvée (22), et
dans lequel les ouvertures d'entrée (24) sont conçues de telle sorte qu'un guidage du fluide (M) peut être effectué vers l'intérieur du boîtier (3) dans chaque orientation de rotation du capteur de mesure (1) autour de la direction d'insertion (7).

2. Capteur de mesure selon la revendication 1,
dans lequel la ligne périphérique extérieure (22) du boîtier (2) est sensiblement elliptique.

3. Capteur selon l'une des revendications 1 ou 2,
dans lequel la ligne périphérique extérieure (22) du boîtier (2) est sensiblement circulaire.

4. Capteur de mesure selon l'une des revendications 1 à 3, dans lequel le boîtier (3) est réalisé de manière symétrique de rotation autour de la direction d'insertion (7) .

5. Capteur de mesure selon l'une des revendications 1 à 4, comportant un support (4) destiné à relier mécaniquement le capteur de mesure (1) au dispositif (5), dans lequel le support (4) est disposé sur le boîtier (3) et présente une butée (42) qui s'étend perpendiculairement à la direction d'insertion (7).

6. Capteur de mesure selon la revendication 5, dans lequel la butée (42) présente, perpendiculairement à la direction d'insertion (7) du boîtier (3), une ligne périphérique circulaire (22).

7. Capteur de mesure selon l'une des revendications 5 ou 6,
dans lequel un joint annulaire (44) est disposé sur la butée (42).

8. Système de capteur de mesure comportant un capteur de mesure (1) selon l'une des revendications 1 à 7 et un dispositif (5) destiné à guider un fluide (M), dans lequel le dispositif (5) présente une ouverture (52) pour l'insertion du capteur (1), et dans lequel la forme de l'ouverture (52) est complémentaire de la ligne périphérique extérieure (22) du boîtier (2).
